(19)

Europäisches
Patentamt
European
Patent Office
Office européen
des brevets

(11) **EP 3 395 170 A1**

(12) **EUROPEAN PATENT APPLICATION**
published in accordance with Art. 153(4) EPC

(43) Date of publication:
**31.10.2018 Bulletin 2018/44**

(21) Application number: **16877058.4**

(22) Date of filing: **22.12.2016**

(51) Int Cl.:
***A01N 25/28*** (2006.01)    ***A01N 25/34*** (2006.01)
***B65B 25/02*** (2006.01)    ***B65B 25/04*** (2006.01)
***B65D 65/46*** (2006.01)

(86) International application number:
**PCT/CL2016/050075**

(87) International publication number:
**WO 2017/106984 (29.06.2017 Gazette 2017/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **22.12.2015 CL 20153698**

(71) Applicant: **Universidad de Santiago de Chile
Santiago (ES)**

(72) Inventors:
• **ZAPATA RAMIREZ, Paula Andrea
Santiago (CL)**
• **YAÑEZ SANCHEZ, Mauricio Edinson
Santiago (CL)**

(74) Representative: **Pons Ariño, Angel
Pons Patentes y Marcas Internacional, S.L.
Glorieta Rubén Dario 4
28010 Madrid (ES)**

(54) **DEGRADABLE PACKAGING FILM FOR FRUIT AND VEGETABLES**

(57)    The present invention relates to a degradable film for packaging fruit and vegetables, which comprises a polyolefin-based polymer matrix that incorporates an antimicrobial (biocidal or fungicidal) active ingredient of an essential oil, selected from the group consisting of: carvacrol, cinnamaldehyde, cineol, sabinene, thujaplicin, or a mixture of same, or incorporates the essential oil itself, selected from the group consisting of: cinnamon oil, oregano oil, eucalyptus oil, nutmeg oil, hinoki oil, or a mixture of same. The polymer matrix further comprises degrading agents. The invention also relates to a method for microencapsulating the antifungal or antibacterial active ingredients of the essential oil or the essential oil itself, and to a method for preparing the film.

**EP 3 395 170 A1**

## Description

### Field of the Invention

The present invention relates to a degradable film for packaging fruit and vegetables, comprising a polyolefin-based polymer matrix incorporating an antimicrobial active agent (biocide or fungicide) of an essential oil selected from the group consisting of carvacrol, cinemaildehyde, cineol, sabinene, thujapliscin or a mixture thereof or incorporates said essential oil selected from the group consisting of: cinnamon oil, oregano oil, eucalyptus oil, nutmeg oil, honokitiol or mixture thereof, and further comprising a crosslinking agent; microencapsulation process of said antifungal and antibacterial active agents or said essential oil; and process for preparing the film.

Preferably, this film is an intelligent film for packaging of fruits and vegetables, based on a polyolefin selected from polyethylene (PE), polypropylene (PE), polystyrene (PS) and ethylene vinyl acetate (EVA) and antimicrobial agents of an essential oil or said essential oil, which may be microencapsulated in an encapsulating agent selected from the group consisting of: cyclodextrin ($\beta$- or $\gamma$ ~), clay or silica; and also incorporates a crosslinking agent selected from the group consisting of: nano calcium carbonate, calcium carbonate, starch, cellulose or a mixture thereof. Said film has antimicrobial properties (biocides or fungicides), and upon completion of their life cycle, is degradable to the environment.

## BACKGROUND OF THE INVENTION

There are three different issues that are pending in the area of food films. First, the slow degradation of plastics since polyolefin currently used in their manufacture, cannot be easily degraded under ambient conditions - degradation is about 400 years - thus causing an increase in contamination and environment impact as a result of the accumulation of plastic waste. Second, the accumulation of waste is another problem that currently generates great environmental damage. In Chile, in 2009, the generation of municipal solid waste reached 6.5 million tons of plastic waste. Finally, a large number of foods, fruits, vegetables or drugs deteriorate by action of the environment, bacteria, fungi etc., because not have a suitable container to prevent spoilage and properly isolate the product.

Chile is a major exporter in the agricultural area especially in fruits, ranking first worldwide in the export of grapes, and secondly in avocado [http://www.prochile.cl/nexos/antecedentes_exportaciones_fruta_chilena.pdf (seen in November 2012), as well as other fruits like kiwi, apples, pears, cherries. Thus the fruit packing industry plays an important role in economic development. Therefore, it is very important to have a good mechanism to prevent fruit ripening during transport, among the most common factors that alter the properties of the fruit are moisture, light, oxygen and bacteria, fungi and pests environment. An economic analysis shows that exporters lose up to 30% of the fresh products due to decomposition during maturation and transport (RHIM JW, Ng PKW criticize Reviews in Food Science and Nutritions, 47 (4), 411-433). These challenges carry out to the search of alternatives, to maintain quality of fruits. Currently, it is reported the preparation of plastic films with biocidal properties, which contain certain metals as silver, copper or titanium (Zapata PA, L Tamayo, M. Paez, E. Cerda, Azocar L, F. Rabagliati., E . Poiym. J. 47 (2011) 1541, Paiza H "Gutierrez S., O. Saiazar, Fuenzaíida V., AvilaJ., Quijada R., Macromol. Rapid. Cornmun. 31 (2010) 63). It is known the advantage of silver and copper because they are potent in a broad spectrum against bacteria, fungi, algae and viruses (Duncan TV, J. Colioid interf. Scien., 363 (2011) 1-24). The preparation of composite materials based on polymers having a property release of metal ions can be controlled for a certain period of time. In the case of using nano particles of silver and copper as biocides, its toxicity to humans is questioned.

Industrially in the field of food packaging, in Chile, sulfur dioxide ($SO_2$) is used as an antimicrobial agent. $SO_2$ is an antioxidant and preservative to products like vegetables, fruits and wine. $SO_2$ acts as a food preservative preventing microbial growth. However, $SO_2$ can cause various health problems such as chronic headache and memory disorders. In 1989 a tolerance level of 10 ppm for $SO_2$ was introduced. Various efforts have been developed for packaging under a controlled release of $SO_2$ in polyolefins. Multilayer plastics containing on the outer surface of sulphyl calcium, and a release layer, sulfur dioxide, $SO_2$. It is known that the method used for the release of $SO_2$ is expensive and also may present health problems if it comprises high concentrations of $SO_2$. Therefore, it is important to look for a natural product that acts as a biocide and fungicide for foods, especially fruits. On the other hand, regarding the degradability of these films for food packaging, companies must be fulfilled in most countries, a number of regulations governing waste management and plastic films based on polymer bags. Few companies are already certifying that their films have sustainability and the same are friendly to the environment. These bags have among other characteristics of oxodegradability but the disadvantage of additives used in their preparation as prodegradants is that they require the presence of light so that the polymer is degradable to environment. Therefore, in the area of degradability of films based on polymers it has great challenges to resolve.

Moreover, demand for food packaging to maintain its quality for a long period, has increased sharply in recent decades, and it is expected to continue to grow in the same way. Therefore, different methodologies have been developed to increase the lifetime of food. A film for preservation of lettuce, was prepared with polypropylene and $TiO_2$ nanoparticles.

The packaging inhibited the growth of *E. coli* in lettuce (Chawengkijwanich C, Y. Hayata, int.J.FoodMicrobiol. 123 (2008) 288). Materials used as antimicrobial agents in polymers are zinc oxide nanoparticles (Li X., Y. Xing, Jiang.Y., Ding Y., Li W, IntJ.FoodSci Tech 44 (2009) 2161) and chitosan (Xing K Chen XG, M. Kong, Liu CS, DS Cha, Park HJ, Carbohydr.Polym. 76 (2009) 173).

Other compounds of great interest as biocidal and fungicidal agents are essential oils (Burt S., International Journal of Food icrobioiogy 94 (2004) 223-253). The oils can be extracted from cinnamon (cinalmaldehyde), oregano (carvacrol), eucalyptus (cineol), thyme (timol), among others. The microbicidal activity of various essential oils in the incorporation of polymers has been studied) Lopez P., Sanchez C, Batile R., Nenn C, J. Agric. Food Chem., 55, 4348 (2007). Polyethylene films with clay and carvacrol show biocidal properties against different bacteria (Persian P. et. al, Polymer Engineering Science, 49 (2009) 1447). Therefore, an alternative to obtain a film biocide, an essential oil is incorporated into a polymer matrix.

Due to the alarming increase of plastic waste worldwide, this project intends to seek a degradable polyolefin retain this function while meeting the life cycle but degrade their final products, are non-toxic to environment. In the literature are some patents using transition metals as salts, prodegradants Examples include magnesium stearate and oleate, cobalt salts and ferric acetate (Newland GC, GR Greear, Tamblin JW. Polyolefin Compositions and degradable films. Pat US3454510, assigned to Eastman Kodak Co .; 1969, Peng C. polyolefin degradable resin and process for making same. Pat WO2008020752, assigned to Gain Mark Technology Ltd.; 2008). Other prodegradants are from photostable metal oxides such as $TiO_2$ and ZnO (Ammala A, Hill AJ, Meakin P, Pas SJ, Turney TW. J Nanopart Res 2002: 4: 167-74). It has been reported that only 2% prodegrandante relative weight is required to the polyolefin, and it does, the process is friendly by extrusion or injection, in the literature is reported the study of calcium carbonate, starch and cellulose for degradation polyolefins as polyethylene and polypropylene (F'orsberg G., Moessner EK., Chapman GM., Packages. Pat WO2006009502, ADD-XBIOTECH, 2006]. This was done for the purpose of obtaining a product for food packaging and bags with oxodegradables features. Calcium carbonate as nanoparticles has also been used as reinforcing polyethylene and propylene in order to improve mechanical properties. This mineral also serves to promote and accelerate degradation of polyolefins under ambient conditions, which is evidenced by a reduction in their molecular weights and a significant increase in carbonyl which gives an idea of breaking the chains, formation of ketones, aldehydes and others, and thus degradation of polymer (Pablos J. L, Abrusci C, Marin I., J. Lopez Marin, Catherine F., Espí E ., Corrales T., Polymer Degradation and Stabilitty 95 (2010) 2057, Li J, Yang R., Yu J., Liu Y., Polym.Degrad. Stab., 93 (2008) 84). US2014242138 discloses formulations suitable to microencapsulated essential oils for agricultural applications, wherein at least one essential oil are into a solid core encapsulated by unfriendly outer shell consisting essentially of a multivalent salt form of at least one alkanoic acid. Also it teaches a preparation process for the formulation and its application as a preservative, disinfectant and insect repellent product for storing agricultural products or food.

US2014154426 discloses a process for obtaining a film composed by the incorporation of antimicrobial agents naturally occurring into a polymer structure to develop packages to increase the life of chilled meat, preferably fresh salmon, wherein said process comprises the following steps: a) obtaining microcapsules of an antimicrobial agent of natural origin into wrapping means, comprising the steps of: a1) the production of an aqueous phase dissolving gum arabic (Quimatic) and Tween 20 in distilled water; a2) producing an oil phase through a solution of the antimicrobial agent of natural origin with a mixture of thymus and carvacrol; a3) preparing an emulsion incorporating the aqueous phase of the oil phase; b) the incorporation of the microcapsules into polymers, treating them previously to reduce its surface tension (crown treatment), the microcapsules of sedimentation on the film, and drying them into an oven at controlled temperature.

CN103788494 discloses a film of fresh fruits and vegetables and a method for their preparation, wherein the film comprises polyethylene (PE), polypropylene (PP) and a high barrier ethylene/vinyl alcohol copolymer material (EVOH), which serve a basic commodities, and seed essence of rosemary oil and grape as active ingredients. The film is prepared by uniformly mixing the basic materials and active ingredients for preparing a modified resin through a twin screw extruder, and then extrusion and blown through a modified resin. The film thus prepared can inhibit microbial growth, water evaporation and breathing rate of fruits and vegetables, obtaining an effect of oxidation resistance, enzymatic browning of fruits and vegetables.

CN103159970 relates to a method of preparing an edible film with antibacterial and antioxidant functions, and belongs to the technical field of edible packaging materials. The preparation method described by the invention comprises the following steps: 1) dissolving and gelatinizing corn starch; 2) dissolving gelatin; 3) chitosan solution; 4) adding glycerin and plant essential oil or essential oil components; 5) mixing, homogenizing and refining; 6) degassing; 7) casting tape; and 8) drying and removing the film.

The preparation method shows the beneficial effects of chitosan, corn starch and gelatin shown as base materials of the edible film. The edible film thus prepared has advantageous mechanical properties, high barrier performance and high transparency. Among the essential oils of oregano oil, carvacrol and cinamaldehyde as antibacterial agents and an antioxidant to be added in the edible film taught.

CN101965863 describes a microencapsulated to maintain freshness of fruit and vegetables which are prepared from chitosan, propolis and beta-cyclodextrin, used as wall materials, and cassia oil, rosemary oil and lemon oil, used as core materials. The microencapsulated is prepared by the steps of: adding the beta-cyclodextrin and water in a bottle with three ports electric stirring and heating at 60-70 °C to dissolve the beta-cyclodextrin in water stirring continuously and cooling to 40-45 °C. Adding core materials: cassia oil, rosemary oil and lemon oil ensure that the mixture of essential oils is uniformly dispersed in a solution then cooled slowly to room temperature to obtain a microcapsule of essential oil in beta-cyclodextrin, adding material of a mixed wall of chitosan and propolis, and the addition of Tween-80 and glycerol, stirring continuously for 30 minutes to form the microencapsulated,

US2008220036 teaches antimicrobial packaging material for foodstuffs containing from 0.05% to 1.5% by weight of a natural essential oil. The oil can be selected mainly from linalool and/or methylchavicol, but also one or more of cytral, geraniol, methyl cinnamate, methyl eugenol, 1,8-cineole, trans- - bergamotena, carvacrol and thymol mixed with one or more polymers selected from ethylene and vinyl alcohol, polyacrylates, including copolymers of ethyl acrylate, methyl ionomers, nylons and other hydrophilic polymers or polymers having functional groups capable of anchoring part. A binding agent such as polyethylene glycol is added to the mixture to improve retention of volatile oil in the polymer during processing. This material does not have regulatory limitations and concentrations referred to, is not detectable bad flavors.

MX2007008879 teaches formulations containing essential oils microencapsulated and a non-volatile vehicle, which are useful as a repellent, insecticidal, pesticidal, ovicidal or larvicide. The film of the present invention is an intelligent film for packaging of fruits and vegetables with dual function, biocide and fungicide, and also has properties degrading in the environment. The incorporation of an active agent or essential oil will provide the polymer or film of biocidal and fungicidal properties (antimicrobial) in order to maintain, increase the lifetime and quality of product is to be marketed, by preventing the breakdown of the fruit.

The aim of this film is that the fruit or vegetable, retains its intrinsic characteristics during transport to markets and can be delivered in good condition. In addition, once the film meets the useful life presents degrading properties in the environment, over a period of 3-4 years. Which is obtained by preparing a film with addition of a degrading or relieving agent or proxidant which mitigates pollution and reduces the waste generated in the environment.

**BRIEF DESCRIPTION OF THE INVENTION**

The present invention relates to a film for packaging fruit and vegetables comprising a polyolefin-based polymer matrix incorporating an antimicrobial active agent (biocide or fungicide) of an essential oil selected from the group consisting of carvacrol, cinnemaldehyde, cineol, sabinene, thujaplicin or a mixture thereof or incorporates said essential oils selected from the group consisting of: cinnamon oil, oregano oil, eucalyptus oil, oil of nutmeg, oil honokitioí or a mixture thereof, which may be further microencapsulated, and further comprising a crosslinking agent; microencapsulation process such active antifungal or antibacterial agents biological essential oil or said essential oil; and process for preparing the film. This film is an intelligent film for packaging fruit and vegetables, comprising a polyolefin-based polymer matrix incorporating said antimicrobial agent essential oil or said essential oil, which can optionally be microencapsulated, and also incorporates a crosslinking agent; and the microencapsulation procedure of said antimicrobial agent of essential oil or said essential oil, and method of making the film.

This film is an intelligent film for packaging fruit and vegetables comprising a polyolefin-based polymeric matrix selected from polyolefin polyethylene (PE), polypropylene (PE), polystyrene (PS) and ethylene vinyl acetate (EVA), which incorporates said antimicrobial agent of essential oil or said essential oil, which can be optionally microencapsulated and wherein said eencapsulating agent is selected the group consisting of cyclodextrin ($\beta$- or $\gamma$-), clay or silica; and also incorporates a crosslinking agent selected from the group consisting of nano calcium carbonate, calcium carbonate, starch, cellulose or a mixture thereof, and further wherein the nano calcium carbonate serves as reinforcing agent. Said film has antimicrobial properties (biocides or fungicides), and upon completion of their life cycle, is environmentally degradable.

As antimicrobial active ingredients of essential oils are including carvacrol, cinamaldehyde, cineol, sabinene, thujaplicin or a mixture thereof. These essential oils come from oregano, cinnamon, eucalyptus, nutmeg, honokitiol, among other plants. The active ingredients have the advantage of having higher thermal stability than the essential oil extracts. The active ingredients may microencapsulate in order to avoid volatilization and/or decomposition of the antimicrobial agents because of the conditions of the extrusion process. Agents of microencapsulation to active ingredients including: cyclodextrin ($\beta$- or $\gamma$), clay or silica. Preferably, the agent is $\beta$-cyclodextrin microencapsulation which is a natural oligosaccharide obtained from the enzymatic degradation of starch. For microencapsulation variables, encapsulation variables ($\beta$- cyclodextrin material relationship/antimicrobial essential oil (or active ingredient), encapsulation process, stirring speed, etc.) were established. As a comparison, oils (oregano and cinnamon) and its active ingredients (carvacrol, cinnemaldehyde) were incorporated directly into the polyethylene by melt mixing for forming the film or a film. Simultaneously, nanocalcium carbonate joined polyethylene to study the degradability of this time simulating environmental conditions.

**BRIEF DESCRIPTION OF THE FIGURES**

Figure 1 shows the IR spectra pure β-cyclodextrin, carvacrol and cinnamaldehyde pure, and β-cyclodextrin microcapsule/carvacrol (B-CD-Car) and β-cyclodextrin / Cinemaldehído (b-CD-Cin)..
Figure 2 shows DSC thermograms β-cyclodextrin (b-CD) and β-cyclodextrin microcapsule/carvacrol (b-CD-Car) and β-cyclodextrin/cinnamaldehyde (B-CD-Cin).
Figure 3 shows The TGA thermogram of b-CD and inclusion complexes b-CD/cinnamaldehyde (b-CD-Cin) obtained by a oprecipitation method.
Figure 4 shows SEM micrograph taken at (A) b-CD, (B) b-CD cinnamaldehyde and (C) b-CD-carvacrol, by a coprecipitation method.
Figure 5 shows IR spectra polyethylene, cinnamaldehyde, b-CD, polyethylene/b-CD-Cin and polyethylene/Cin.
Figure 6 shows IR spectra polyethylene, carvacrol, b-CD, polyethylene/b-CD-Car and polyethylene/Car.
Figure 7 shows DSC thermograms for films, PE only, PE + Cinnamaldehyde 5%, PE + b-CD-cinnamaldehyde 5% PE + b-CD cinnamaldehyde 5% (active ingredient).
Figure 8 shows DSC thermograms for films, PE only, PE + Carvacrol 5%, PE + b-CD-Carvacrol 5% PE + b-CD-carvacrol (5% active).
Figure 9 shows thermograms TGA polyethylene (PE), polyethylene-cinnamaldehyde microcapsules (PE + b-CD-Cin) and carvacrol (PE + b-CD-Car).
Figure 10 shows the carbonyl of PE and PE/CaCO$_3$ at different irradiation times.

**DETAILED DESCRIPTION OF THE INVENTION**

The present invention relates to a film for packaging fruit and vegetables, comprising a polyolefin-based polymer matrix incorporating an active antimicrobial agent (biocide or fungicide) of an essential oil selected from the group consisting of carvacrol, cinnamaldehyde, cineol, sabinene, thujaplicin or a mixture thereof, or incorporating said essential oil selected from the group consisting of: cinnamon oil, oregano oil, eucalyptus oil, nutmeg oil, honokitiol oil or a mixture thereof, which may be microencapsulated, and further comprising a crosslinking agent and microencapsulation process, said antimicrobial active of essential oil or said essential oil; and process for preparing the film.

This film is an intelligent film for packaging of fruits and vegetables, a polyolefin-based polymer selected from polyethylene (PE), polypropylene (PE), polystyrene (PS) and ethylene vinyl acetate (EVA) and said antimicrobial essential oil microencapsulated or said oil essential that may optionally be microencapsulated, wherein the encapsulating agent is selected from the group consisting of: cyclodextrin (β- or γ-), clay or silica; and further comprises a crosslinking agent selected nano calcium carbonate, calcium carbonate, starch, cellulose or a mixture thereof. Said film has antimicrobial properties (biocides or fungicides), and upon completion of their life cycle, is environmentally degradable.

In one embodiment of the present invention they were used as antimicrobial actives or fungicide actives: cinnemaldehyde, carvacrol, and essential oils including oregano oil and cinnamon oil, which were previously characterized by infrared spectroscopy analysis (FT- GO). To avoid volatilization or decomposition of essential oils under the conditions of the extrusion process, these were microencapsulated first in order to preserve the active ingredient. Here, variables encapsulation of oils in cyclic oligosaccharides as beta-cyclodextrin, were established. Subsequently, these encapsulated oils were characterized by various spectroscopic and instrumental techniques such as infrared spectroscopy FT-IR, UV-Vis, differential analysis (DSC), thermogravimetric analysis (TGA) and scanning electron microscopy (SE). Using the techniques mentioned, it was confirmed that the essential oil was incorporated into the beta-cyclodextrin.

Beta-ciciodextrina allowing satisfactory encapsulation of essential oils.. As shown in the results, the active ingredients including carvacrol and cinnamaldehyde, are thermally stable, and need not be microencapsulated having a high percentage of fungicide potency when incorporated directly into the polyethylene matrix. Furthermore essential oils, especially oregano oil, need to be microencapsulated because they are more volatile compounds and processing may be loss of these, demonstrating their lower fungicidal properties, being microencapsulated equivalent to 1% its compound, fungicidal activities of 40% is observed, microencapsulation stabilizes essential protecting them of decomposition at high processing temperatures.

EXAMPLES

1. Preparation and results of microcapsules β-Cyclodextrin/active ingredient

The coprecipitation method was used for the preparation of microcapsules of β-cyclodextrin/essential oil or β-cyclodextrin/active agent or antimicrobial agents of an essential oil. We proceeded despite an amount of cyclodextrin β- and solubilized in a water/ethanol solution 2: 1 in a reactor under constant agitation at a temperature of 55 °C in parallel it is prepared a solution of active agent in ethanol 10% v/v. Once the β-cyclodextrin solubilizes a slowly active agent is added to the solution, mixing for 30 minutes 55 °C. Then, the temperature 25 °C decreases and under stirring for 4 hours. The final solution is left under refrigeration for 7 °C within 12 hours, finally the cold precipitate was recovered by vacuum filtration and dried in an oven for 24 hours.

Determination of encapsulation efficiency performance.

The encapsulation efficiency was quantitated by UV spectroscopy in a UV-visible spectrophotometer Weisser SPECORD100. For this a calibration curve using different concentrations previously performed. The encapsulation efficiency (EE), were obtained from the following equations

$$\text{E.E} = \text{mass of active agent obtained/initial mass of the agent} *100$$

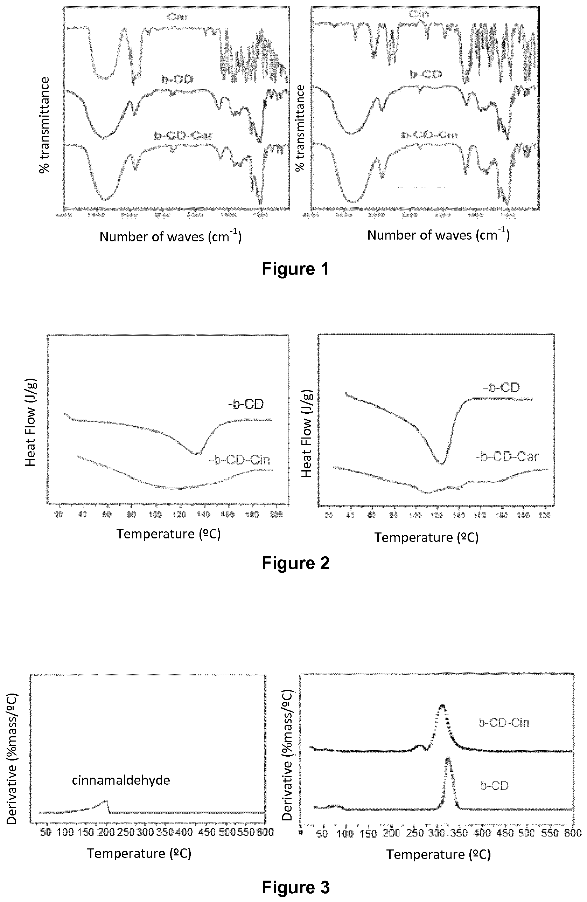

The microcapsules obtained were characterized by spectroscopic techniques such as infrared (FT-IR), UV-visible spectrophotometry and differential scanning calorimetry (DSC), thermogravimetric analysis TGA and scanning electron microscopy (SEM), see Figures 1 -4 and 6-10.

2. Preparation of polyethylene-based films (PE) and antimicrobial active ingredient.

2.1. Preparation of mixed polymer/antimicrobial active by melt mixing:

The mixtures were prepared on a twin screw Brabender equipment. The equipment was preheated to 120 °C and 12 rpm for 5 minutes to allow the polymer to melt. Cinnamon oil (A. cinnamon), oregano oil (A. oregano), carvacrol (Carv), cinnemaldehyde (Cin), beta-cyclodextrin-cavacrol (b-CD-Car). Then, an antimicrobial essential oil selected from the group consisting of added b-CD-Car), beta-cyclodextrin cinemaldehido (b-CD-Cin) and mixed for 2 minutes at 120 rpm until fully homogeneous. Mixtures were studied, varying the amount of said antimicrobial agent, and mixtures 99/1, 97/3 and 95/5% w/w were prepared. The mixtures were formed PE/A. Cinnamon, PE/A. Oregano, PE/Carv, PE/Cin, PE/b-CD-Car and PE/b-CD-Cin, polyethylene alone (100%).

Additionally together with the active agent (cinnemaldehyde or carvacrol), nano calcium carbonate at 5% by weight was incorporated relative to the weight of the polymer, which allows degradation of the polymer.

Table No. 1. Ratio polyethylene (PE)/antimicrobial active principle used in the blends B-CD mass: mass of β-Cyclodextrin, AA mass: mass of active agent

| Film | % Active Ingredient antimicrobial | Mass b-CD | Mass A.A |
|---|---|---|---|
| PE + A. Cinnamon | 1 | 0 | 0.35 |
| | 3 | 0 | 1.05 |
| | 5 | 0 | 1.75 |
| PE + b-CD/A. Cinnamon | 1 | 0.28 | 0.07 |
| | 3 | 0.85 | 0.20 |
| | 5 | 1.40 | 0.35 |
| PE+ A. Oregano | 1 | 0 | 0.35 |
| | 3 | 0 | 1.05 |
| | 5 | 0 | 1.75 |
| PE+ b-CD-A. Oregano | 1 | 0.28 | 0.07 |
| | 3 | 0.85 | 0.20 |
| | 5 | 1.40 | 0.35 |
| PE+ Cinamaldehyde | 1 | 0 | 0.35 |
| | 3 | 0 | 1.05 |
| | 5 | 0 | 1.75 |

(continued)

| Film | % Active Ingredient antimicrobial | Mass b-CD | Mass A.A |
|---|---|---|---|
| PE+ b-CD/Cinamaldehyde | 1 | 0.28 | 0.07 |
| | 3 | 0.85 | 0.20 |
| | 5 | 1.40 | 0.35 |
| PE+ Carvacrol | 1 | 0 | 0.35 |
| | 3 | 0 | 1.05 |
| | 5 | 0 | 1.75 |
| PE+ b-CD-Carvacrol | 1 | 0.28 | 0.070 |
| | 3 | 0.85 | 0.200 |
| | 5 | 1.40 | 0.350 |
| Mass b-CD: Mass $\beta$-Cyclodextrin, mass A.A: Mass of active ingrediente | | | |

2. Preparation of films by pressing molten PE:

The films were obtained by pressing at 170 and 344 C and KPa (50 psi) pressure in a Scientific, Engineering team LabTech. Once obtained the polymer mixtures/antimicrobial agent, these were placed in a mold of 12 cm x 12 cm and 1 mm thick, then a press for 3 minutes, then the plates were cooled and removed performed.

3. Characterization of films of polyethylene films with antimicrobial active

The films obtained were characterized by infrared spectroscopy (FT-IR), differential scanning calorimetry (DSC), thermogravimetric analysis (TGA), also the mechanical properties were studied by tensile deformation and its antimicrobial properties against the growth of *Botrytis cinerea.*

3.1. Infrared Spectroscopy (FTIR) IR spectra were obtained using a Perkin Elmer FTIR-BX a range from 600 to 4000 cm "1.

3.2. Differential Scanning Calorimetry (DSC): Measurements were performed on a Mettler DSC823, with a heating rate of 10 min$^{-1}$ in $N_2$ atmosphere; the samples were heated from 25 to 180 °C.

3.3. Thermogravimetric analysis (TGA): Measurements were performed on a Netzsch-TG209 F1 Libra computer with a heating rate of 10 °C min$^{-1}$ in inert atmosphere, the samples were heated from 25 °C to 600 °C.

3.4. Deformation Tensile Test: The mechanical properties of the materials were determined by tensile-strain in an Instron dynamometer HP D-500 at a strain rate of 50 mm/min at room temperature.

Samples were prepared cutting probes of tests from a plate of 1 mm thickness, using a steel mold according to ASTM D638. At least 4 determinations were performed by material reporting a simple average value.

4. Study fungicidal properties:

Colony counting method: This method quantifies the fungicidal activity of the studied films. The samples and controls were cut into squares of 2.5 x 2.5 cm and sterilized. Subsequently the same were inoculated in sterile saline (SF) from $1x10^4$ and $5x10^6$ spores of the fungus *B. cinerea,* 500 μL were taken and deposited on the surface of the films for 8 hours at room temperature. Subsequently, the films are deposited in 10 mL falcon tubes using SF 50 mL, 500 μL of the recovered suspension are taken and are diluted in 4.5 mL of SF. Then, 200 L are taken and plated on agar Sabouraud by rake technique in duplicate and allowed to incubate for 96 hours at room temperature. Finally, the elapsed time colony forming units (CFU) are quantified and the percentage reduction is obtained by the following equation

$$\% \text{ Reduction} = ((CM)/C) * 100$$

wherein C = Count CFU/mL Control
M = count CFU/mL sample

5. Study film deterioration by incorporating $CaCO_3$

The effect of incorporating calcium carbonate nanoparticles in the degradation of polyethylene in a chamber that simulates solar aging was studied over a period of three months. Movies of 5 x 5 cm were placed in the chamber of degradation (brand Suntest/Atlas XLS 2200 W), irradiation was performed using sunscreens (borosilicate) which provides an irradiance of 550 $Wm^2$ (USE 4892/DIN 53387). It was studied at different aging times carbonyl index of virgin polyethylene films and polyethylene $CaCO_3$ nanoparticles. Degradation was determined by measuring the carbonyl index (CI) as the ratio of the optical density of the band of the carbonyl group at 1715 $cm^{-1}$ with the vibrations of $CH_2$ 1465 $cm^{-1}$.

3. Results

3.1 microencapsulation of essential oils or actives in the β-cyclodextrin IR spectroscopy

In Figure 1, it is shown the FT-IR spectra for the active ingredients (Cinnemaldehyde, carvacrol), β-cyclodextrin and micropcapsules of β-cyclodextrin/active ingredient. The β-designation with cyclodextrin and active substances: carvacrol (b-CD-Car) and cinnamaldehyde (b-CD-Cin) respectively. Figure 2 shows the spectrum for the active ingredients encapsulated in β-cyclodextrin. Microcapsule obtained: β-cyclodextrin7Carvacrol (b-CD-Car) and β-cyclodextrin/Cinnemaldehyde (b-CD-Cin). For carvacrol (b-CD-Car) appears signals near 1300-1400 $cm^{-1}$ corresponding mainly to C-OH interactions of the aromatic ring, as shown for cinnamaldehyde (b-CD-Car) having a signal close to 1670 $cm^{-1}$ corresponding to a C = O characteristic of this compound.
Microencapsulation of essential oils of oregano and cinnamon was also verified by infrared IR.
All these signals are confirming that the encapsulation process of different antimicrobial active ingredients studied in the β-cyclodextrin cavity was satisfactory.
By spectrophotometry UV-Visible encapsulation efficiency (EE) was determined at different stirring rates for all active agents by the following equation:

$$EE. = \text{agent mass obtained/initial mass of agent x100 (Equation 1)}$$

From the results, it can be seen that the values of EE increased with increasing agitation reaching 90% for 1000 rpm. This indicates that the agitation plays an important role, as it can facilitate the process of inclusion of hydrophobic antimicrobial active ingredients within the cavity of the β-cyclodextrin. Moreover, no differences between essential oils and antimicrobial active principles are mainly appreciated, this indicates that although the oils have a wide variety of compounds can be incorporated into these encapsulanting agent.

Thermal analysis

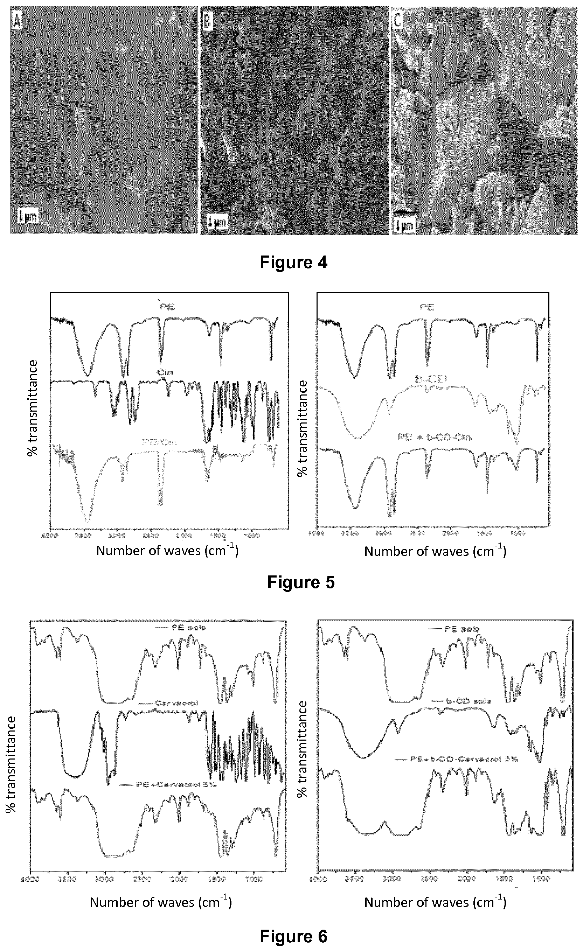

DSC thermograms obtained for the β-cyclodextrin and the microcapsules with active principles carvacrol (b-CD-Car) and cinnamaldehyde (b-CD-Cin) (Figure 2). An endothermic signal near 130 °C characteristic of the β-cyclodextrin is observed in the case of microcapsules a less intense signal is recorded with a small shift for both antimicrobial active, attributed to interaction of the active principles b-CD. The change in the endothermic signal and the displacement of this indicates that the inclusion of antimicrobial active modifies the crystalline structure of the cyclodextrin.
Figure 3 shows the TGA thermogram for b-CD and (b-CD-Cin). In the case of b-CD that has a peak near 330 °C corresponding to the thermal degradation of this. For microcapsules b-CD-Cin signal 325 °C corresponding to the b-CD, and other signal around 260 °C and attributed to the degradation of cinnamaldehyde, the TGA thermogram for pure cinnamaldehyde seen shows the beginning close to the degradation and the degradation peak is observed near the 205 °C. With this analysis along with corroborate the incorporation of active agent in the b-CD, the protective effect is also appreciated that encapsulation gives the active ingredient in high temperature conditions. Similar behavior was found for films containing carvacrol and b-CD.
By scanning electron microscopy (SEM), see Figure 6, shows that the microcapsules b-CD-Car and B-CD-Cin Carvacrol, present a different morphology to the b-CD pure, this change is attributed to the change in the crystal structure of the b-CD product incorporating the active agents.
The microcapsules have an irregular shape, it is present regions where the microcapsules are agglomerated, but some with good dispersion having an average size of 4 μm.

Using the above techniques it was confirmed that the antimicrobial active ingredients incorporated into the β-cyclodextrin allows satisfactory encapsulation.

As the polymer matrix of low density polyethylene (LDPE) was used, polyethylene is generally characterized as a semicrystalline polymer, with good chemical resistance and processability, good electrical insulator, has some degree of flexibility. Meanwhile LDPE has a high degree of branching, which hinders the ordering of the polymer chains. It is an amorphous polymer with low density (0.92 to 0.94 $g/cm^2$), soft and flexible. It is used in various applications, from plastic bags to electrical insulation.

3.2 Characterization of the films of antimicrobial active Infrared Spectroscopy (IR)

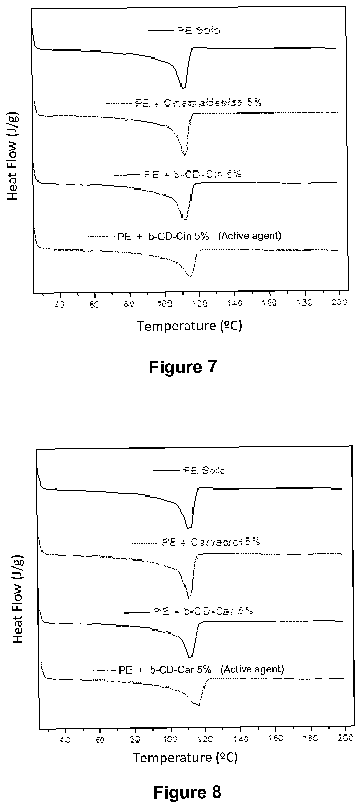

Figure 6 shows the IR spectra obtained for polyethylene (PE), cinnamaldehyde (Cin), β-cyclodextrin (b-CD), polyethylene/b-CD-Cin and polyethylene/Cin. Signals characteristics of polyethylene also bands characteristic of cinnamaldehyde and b-CD are observed. Note that in films containing the active agent without encapsulation, the appearance of a signal between 1500-1700 $cm^{-1}$, shows that although this overlap corresponds to a signal characteristic of cinnamaldehyde, for films with microcapsule b-CD-cinamaldehyde a signal appears in the region between 1000-3000 $cm^{-1}$ feature of the b-CD, the case of carvacrol (figure 7), a similar effect to the case of the film shown at 5% of the agent without encapsulating a signal appears between 1550-1580 $cm^{-1}$, characteristic of carvacrol, for the case of the microcapsule film, clearly shows the signals characteristic of the b-CD to 3500 $cm^{-1}$ and between 1100-1150 $cm^{-1}$, this confirms that even after the processes, both melt mixing, pressing as the active agent is entrapped in the matrix.

Analysis and thermal stability of PE films with the active agent

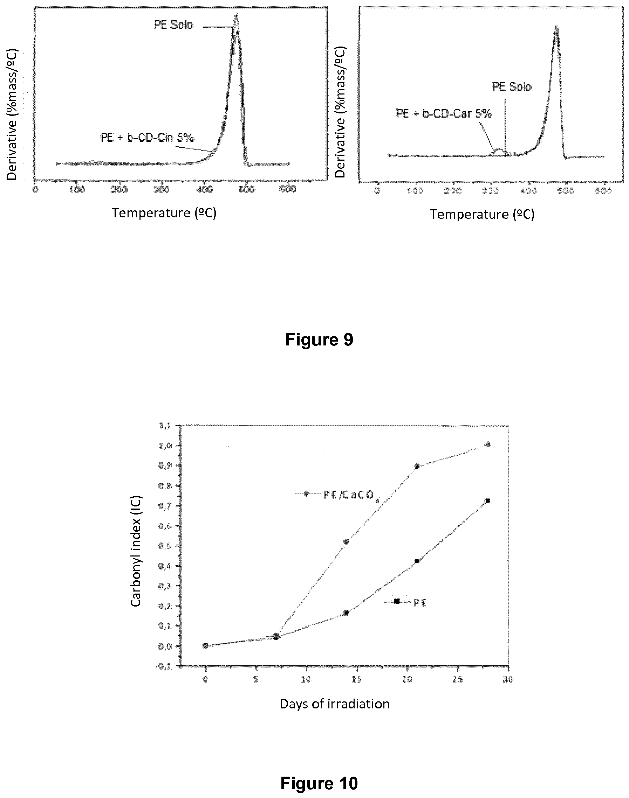

Figures 8 and 9 show DSC thermograms for the polyethylene film alone and the films cinnamaldehyde, Carvacrol, containing 5% antimicrobial active loading and microcapsule b-CD-cinnamaldehyde, b-CD-Carvacrol (containing 1% of the agent in the load). signal close crystalline melting is observed at 110 °C for the case of polyethylene alone, for all films studied either with the antimicrobial active ingredient unencapsulated and incorporating microcapsule, it can be seen that there are no major differences in virgin polyethylene as to exhibit thermal behavior, crystalline melting signal for all remains in the range between 110 and 115 °C. Then, the incorporation of antimicrobial active either encapsulated or not encapsulated, does not affect the thermal properties of the material.

Figure 10 shows the TGA thermograms for both PE, as for microcapsules b-CD-Cin and b-CD-car 5% under a nitrogen environment. In the case of cinnamaldehyde, the thermogram no differences with polyethylene without incorporating the active compound, so that the presence of active agent within the matrix not significantly affects the degradation of the film obtained. However in the case of carvacrol, a signal close to 305 °C attributed to a thermal decomposition of the β-cyclodextrin confirmed the presence of the microcapsules within the matrix can be seen. By both analyzes, DSC and TGA, it is confirmed that the incorporation of the microcapsules into the matrix does not affect the thermal properties of the films compared to virgin polyethylene.

Activity films obtained by the colony counting method: Tables 2 shows the results obtained for the polymer films with carvacrol and cinnamaldehyde alone and their essential oils (oregano, cinnamon), along each encapsulated in the β-cyclodextrin. With increasing active agent (cinnemaldehyde and carvarcrol) increased the yield percentage reduction up to 99.9%, for both active agents are provided when the loading was 5%, both compounds show a fungicidal activity. The contrary for essential oils so may be because they are less stable at high temperatures, volatizing during the process. When encapsulated compounds are incorporated into the film, the fungicidal effect is less reaching a 31,4% carvacrol when the load was 5% by weight. This is primarily because the amount of active ingredient that is incorporated into the inclusion complex is less, equivalent to 1%. Moreover one should consider that the release of the active ingredient to the surface of the film is slower and requires more time. Otherwise for films without complex, where the active agents are entrapped in the polymer matrix and diffusion to the surface it is much faster and in greater quantity generating this difference in fungicidal activity.

Table 2. Percentage reduction in colony forming units (CFU) of films by colony counting method

| Film | Ratio PE/load (%) | Fungicide Activity (%) |
|---|---|---|
| | 99/1 | 9.,4 |
| PE + A. Cinnamona | 97/3 | 31.2 |
| | 95/5 | 70.5 |
| | 99/1 | 12.6 |
| PE + A. Oregano | 97/3 | 46.8 |
| | 95/5 | 38.9 |

(continued)

| Film | Ratio PE/load (%) | Fungicide Activity (%) |
|---|---|---|
| PE + Cinamaldehyde | 99/1 | 85.3 |
| | 97/3 | 93.7 |
| | 95/5 | 99.9 |
| PE + Carvacrol | 99/1 | 25.4 |
| | 97/3 | 92.5 |
| | 95/5 | 99.9 |
| PE + b-CD-A. Cinnamon | 99/1 | 24.5 |
| | 97/3 | 31.2 |
| | 95/5 | 39.3 |
| PE + b-CD-A. Oregano | 99/1 | 15.7 |
| | 97/3 | 20.8 |
| | 95/5 | 41.4 |
| PE + b-CD-Cinamaldehyde | 99/1 | n.d |
| | 97/3 | n.d |
| | 95/5 | 20 |
| PE + b-CD-Carvacrol | 99/1 | 27.9 |
| | 97/3 | n.d |
| | 95/5 | 31.4 |

Effect of incorporation of calcium carbonate into polyethylene

In Table 3, the mechanical properties of nanocomposites for PE/CaCO$_3$ are presented. Significant changes can be seen in the studied parameters, on the one hand an increase of up to 25% in Young's modulus is, which means that to deform the nanocomposite greater effort is needed with respect to the matrix without adding nanoparticles. This is because the nanoparticles generate new nucleation centers forming more spherulites and a smaller size, this crystallinity or compact arrangement of the chains are responsible for giving rigidity to the polymer.

The incorporation of nanoparticles of calcium carbonate generated new centers of fracture with the addition of 5 and 8%, because the amorphous region and the chains having mobility are affected by the addition of these reducing their mobility, this may be due to agglomerations of the nanoparticles in the polymer matrix.

Optimum incorporation is performed with the addition of 5% improving 20% its stiffness, values at 8% do not show a wide variation due to the low dispersion of the nanoparticles in the matrix.

Table 3. Mechanical properties of nanocomposites for CaCu 3 using as polyethylene low density matrix

| Particles CaCO$_3$ | Loading | Módulus ofe Young (E) (Mpa) | Elastic limito r fluency point ($\sigma$y) (Mpa) | Elongatio breaking off (%) |
|---|---|---|---|---|
| S/P | S/N | 202 ± 7 | 7,71 ± 0,03 | 60 ± 8 |
| Nanoparticles | 3% | 230 ± 7 | 8,38 ± 0,15 | 59 ± 10 |
| Nanoparticles | 5% | 250 ± 4 | 8,40 ± 0,09 | 42 ± 3 |
| Nanoparticles | 8% | 254 ± 10 | 8,08 ± 0,14 | 39 ± 1 |

The effect of incorporating calcium carbonate nanoparticles in the degradation of polyethylene in a chamber that simulates solar aging was studied over a period of three months. Films 5cm x 5cm were put into the chamber degradation Suntest mark/Atlas XLS 2200 W, irradiation was performed using sunscreens (borosilicate) which provides an irradiance of 550 Wm$^2$ (USE 4892/DIN 53387). A different aging times carbonyl index of virgin polyethylene films and polyethylene CaCO$_3$ nanoparticles was studied. Degradation was determined by measuring the carbonyl index (CI) as the ratio of the optical density of the band of the carbonyl group at 1715 cm$^{-1}$ with the vibrations of CH$_2$ 1465 cm$^{-1}$.

Infrared polyethylene non-irradiated and after irradiation for 28 days with the addition of nanoparticles a band at 1700 cm$^{-1}$ was observed due to the degradation suffered polyethylene in time, by the incorporation of nanoparticles.

Can interfere nanoparticles are accelerating the degradation of polyethylene.

In Figure 6 the carbonyl of polyethylene PE/ CaCO$_3$ different irradiation times is presented. It can be seen increased carbonyl index is much higher incorporating nanoparticles CaCO$_3$ to polyethylene, these nanoparticles accelerated degradability polyethylene. The best results were obtained for films with 5% active (cinnemaldehyde or carvacrol) and 5% nanoparticles of calcium carbonate so that these conditions are suitable for preparing an intelligent film or film having fungicidal properties but at the same time it is degraded environmental conditions.

**Claims**

1. Degradable film for packaging of fruits and vegetables with antimicrobial properties, comprising a polyolefin-based polymer matrix incorporating an active antimicrobial agent of esential oil selected from the group consisting of carvacrol, cinnemaldehyde, cineole, sabinene, thujaplicin or a mixture thereof or incorporating said essential oils selected from the group consisting of: cinnamon oil, oregano oil, eucalyptus oil, nutmeg oil, honokitioí oil or a mixture thereof, and wherein said polyolefin-based polymeric matrix is selected from the group consisting polyethylene (PE), polypropylene (PE), polyesthyrene (PS) and ethylvinylacetate (EVA), and wherein said polymeric matrix also includes a crosslinking agent selected nano calcium carbonate, calcium carbonate, starch, cellulose or a mixture thereof and wherein the nano calcium carbonate is also a reinforcing agent.

2. The film of claim 1, wherein said microbial active agent of essential oil or essential oil is microencapsulated.

3. The film of claim 2 wherein said microencapsulanting agent is selected from the group consisting of: β-cyclodextrin, γ-cyclodextrin, or silica clay.

4. The film of claim 1 wherein said polymeric matrix is a matrix of polyethylene.

5. The film of claim 4, wherein said polyolefin matrix is a matrix of high density polyethylene or low density polyethylene.

6. The film of claim 5, wherein said polyolefin matrix is a matrix of low density polyethylene.

7. The film of claim 1, wherein said antimicrobial active of essential oil is selected from cinnamaldehyde, carvacrol or a mixture thereof.

8. The film of claim 7, wherein said antimicrobial active of essential oil is cinnamaldehyde.

9. The film of claim 7, wherein said antimicrobial active of essential oil is carvacrol.

10. The film of claim 1, wherein said antimicrobial active of essential oil is oil of oregano.

11. The film of claim 1 wherein the antimicrobial active of essential oil is cinnamon oil.

12. The film of claim 1, wherein said antimicrobial active of essential oil or said essential oil is present in the polymer matrix in an amount between 1-5%.

13. The film of claim 1, wherein said crosslinking agent is present in the polymer matrix in an amount between 3-5%.

14. The film of claim 1, wherein said encapsulating agent is β-cyclodextrin.

15. The film of claim 1, wherein said crosslinking agent is nano calcium carbonate.

16. The film of claim 1, wherein the ratio PE: PE essential microbial agent or agent: essential oil is in the range 99/1 to 95/5 w/w.

17. The film of claim 16, wherein the ratio PE: PE essential microbial agent or agent: essential oil is 99/1% w/w.

18. The film of claim 18, wherein the ratio PE: PE essential microbial agent or agent: essential oil is 97/3% w/w.

19. The film of claim 16, wherein the ratio PE: PE essential microbial agent or agent: essential oil is 95/5% w/w.

20. Process for microencapsulating one antimicrobial active of essential oil selected from the group consisting of: carvacrol, cinnemaldehyde, cineol, sabinene, thujaplicin or a mixture thereof or incorporates said essential oil selected from the group consisting of: cinnamon oil, oil oregano oil, eucalyptus oil, nutmeg oil, honokitiol oil or a mixture thereof, β-ciclodextirn, comprising:

   a) solubilizing β-cyclodextrin in a water/ethanol solution 2: 1 under constant stirring at a temperature of 55 °C, and preparing separately a solution of the active agent of essential oil or said essential oil in 10% ethanol v/v;
   b) adding slowly the solution of said active agent essential oil or said essential oil to the solution with β-cyclodextrin, mixing 55 °C then lower the temperature to 25 °C and stirring to thereby refrigerate to 7 °C, allowing precipitation cold, and then filtered under vacuum to finally allow drying of the precipitate.

21. Process for preparing film of claim 1, comprising:

   a) melting a polyolefin selected from polyethylene (PE), polypropylene (PE), polyestyrene (PS) and ethylvinylacetate (EVA), and adding an antimicrobial active agent of essential oils selected from the group consisting of essential oil: carvacrol, cinnemaldehyde, cineol, sabinene, thujapicin or a mixture thereof or incorporates said essential oils selected from the group consisting of: cinnamon oil, oregano oil, eucalyptus oil, nutmeg oil, honokitiol oil or a mixture thereof, mixing until homogeneous, where the mixture is prepared in proportions 99/1 to 95/5% w/w PE:antimicrobial active of essential oil or PE: essential oil,
   b) adding nano calcium carbonate together with the antimicrobial active up to 5% by weight relative to the polymer; and
   c) preparing the film pressing at 170 °C and 344 KPa and pressure after placing the mixture in a mold, and subsequently cooling to remove the film formed from the mold.

22. The method of claim 21, further **characterized in** step a) microencapsulating said antimicrobial active of essential oil or essential oil in said β-cyclodextrin.

**Figure 1**

**Figure 2**

**Figure 3**

**Figure 4**

**Figure 5**

**Figure 6**

**Figure 7**

**Figure 8**

**Figure 9**

**Figure 10**

# EP 3 395 170 A1

## INTERNATIONAL SEARCH REPORT

| International application No. |
|---|
| PCT/CL2016/050075 |

**A. CLASSIFICATION OF SUBJECT MATTER**

(CIP) A01N25/28, 25/34,B65B25/02, 25/04, B65D65/46 (2017.01)

According to International Patent Classification (IPC) or to both national classification and IPC

**B. FIELDS SEARCHED**

Minimum documentation searched (classification system followed by classification symbols)

(CIP)A01N25/28,25/34,B65B25/02,25/04,B65D65/46    (CPC) A01N25/28,25/34,B65B25/02,25/041

Documentation searched other than minimum documentation to the extent that such documents are included in the fields searched

Electronic data base consulted during the international search (name of data base and, where practicable, search terms used)

STN, Esp@cenet, USPTO, Thomson, Google,  Dialog, Epoque, INAPI

**C. DOCUMENTS CONSIDERED TO BE RELEVANT**

| Category* | Citation of document, with indication, where appropriate, of the relevant passages | Relevant to claim No. |
|---|---|---|
| X<br>Y | US2010/0229462 (CEROWA LP)<br>16/September/2010<br>See the whole document | 1, 4, 5, 6, 13<br>2, 3, 7-12,  14-21 |
| Y | US2014/0154426 A1 (UNIV SANTIAGO CHILE)<br>05/June/2014<br>See the whole document | 2, 3, 14, 15, 20 |
| Y | US2008/0220036 (VICTORIA UNIVERSITY)<br>11 /September/2008<br>See the whole document | 7-12, 15-19, 21 |
| A | WO2006/009502 ( ADD X BIOTECH AB)<br>26/January/2006<br>See the whole document | |

| ☐ Further documents are listed in the continuation of Box C. | ☒ See patent family annex. |
|---|---|

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 10/04/2017 | 17/04/2017 |

| Name and mailing address of the ISA/ | Authorized officer |
|---|---|
| INAPI, Av. Libertador Bernardo O'Higgins 194, Piso 17, Santiago, Chile | SCHMIDT ACHARÁN, Paula Andrea |
| Facsimile No. | Telephone No. |

Form PCT/ISA/210 (second sheet) (January 2015)

**INTERNATIONAL SEARCH REPORT**
Information on patent family members

| International application No. |
| --- |
| PCT/CL2016/050075 |

| | | | |
| --- | --- | --- | --- |
| US2010/0229462 | 10/09/2010 | NONE | |
| US2014/0154426 A1 | 05/06/2014 | BR112013013594(A2) | 13-09-2016 |
| | | EP2646496 (A1) | 09-10-2013 |
| | | EP2646496 (B1) | 09-10-2013 |
| | | ES2532727 (T3) | 31-03-2015 |
| | | WO2012073107 (A1) | 07-06-2012 |
| US2008/0220036 | 11/09/2008 | US8017667 (B2) | 11-09-2008 |
| | | AU2005256153 (A1) | 05-01-2006 |
| | | AU2005256153 (B2) | 06-01-2006 |
| | | EP1773130 (A4) | 18-04-2007 |
| | | EP1773130 (A1) | 18-04-2007 |
| | | WO2006000032 (A1) | 05-01-2006 |
| WO2006/009502 A1 | 26/01/2006 | BRPI0513538 (A) | 06-05-2008 |
| | | CN101027224 (B) | 29-08-2007 |
| | | CN101027224 (A) | 29-08-2007 |
| | | EP1773679 (A1) | 18-04-2007 |
| | | EP1773679 (A4) | 18-04-2007 |
| | | SE0401877 (L) | 15-04-2008 |
| | | SE530267 (C2) | 15-04-2008 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3454510 A
- WO 2008020752 A
- WO 2006009502 A, F'orsberg G., Moessner EK., Chapman GM.
- US 2014242138 A
- US 2014154426 A
- CN 103788494
- CN 103159970
- CN 101965863
- US 2008220036 A
- MX 2007008879

### Non-patent literature cited in the description

- **RHIM JW.** Ng PKW criticize Reviews. *Food Science and Nutritions,* vol. 47 (4), 411-433
- **ZAPATA PA ; L TAMAYO ; M. PAEZ ; E. CERDA ; AZOCAR L ; F. RABAGLIATI.** *E . Poiym. J.,* 2011, vol. 47, 1541
- **PAIZA H ; GUTIERREZ S. ; O. SAIAZAR ; FUEN-ZAÍIDA V. ; AVILAJ. ; QUIJADA R.** *Macromol. Rapid. Cornmun.,* 2010, vol. 31, 63
- **DUNCAN TV.** *J. Colioid interf. Scien.,* 2011, vol. 363, 1-24
- **CHAWENGKIJWANICH C ; Y. HAYATA.** *int.J.FoodMicrobiol.,* 2008, vol. 123, 288
- **LI X. ; Y. XING ; JIANG.Y. ; DING Y. ; LI W.** *IntJ.FoodSci Tech,* 2009, vol. 44, 2161
- **XING K ; CHEN XG ; M. KONG ; LIU CS ; DS CHA ; PARK HJ.** *Carbohydr.Polym.,* 2009, vol. 76, 173
- **BURT S.** *International Journal of Food icrobioiogy,* 2004, vol. 94, 223-253
- **LOPEZ P. ; SANCHEZ C ; BATILE R. ; NENN C.** *J. Agric. Food Chem.,* 2007, vol. 55, 4348
- **PERSIAN P.** *Polymer Engineering Science,* 2009, vol. 49, 1447
- **AMMALA A ; HILL AJ ; MEAKIN P ; PAS SJ ; TURNEY TW.** *J Nanopart Res,* 2002, vol. 4, 167-74
- **PABLOS J. L ; ABRUSCI C ; MARIN I. ; J. LOPEZ MARIN ; CATHERINE F. ; ESPÍ E . ; CORRALES T.** *Polymer Degradation and Stabilitty,* 2010, vol. 95, 2057
- **LI J ; YANG R. ; YU J. ; LIU Y.** *Polym.Degrad. Stab.,* 2008, vol. 93, 84